# EUROPEAN PATENT APPLICATION

(11) **EP 2 085 946 A1**
(43) Date of publication of application: **05.08.2009**
(21) Application number: 07730316.2
(22) Date of filing: 06.02.2007
(51) Int. Cl.: G09B 21/00, A63J 23/02, G08C 17/00, H04B 7/00

(54) **SYSTEM FOR DISTRIBUTION OF SUBTITLES AND AUDIO DESCRIPTION FOR CINEMAS**

(30) Priority: 16.11.2006 ES 200603018
(71) Applicant: Centro Especial De Integracion Audiovisual Y Forma, 41920 San Juan de Aznalfarache Sevilla (ES)
(72) Inventor: HIDALGO VALDES, Vicente Miguel, 41920 San Juan de Aznalfarache (Sevilla) (ES); HIDALGO PULIDO, Jesús Maria, 41920 San Juan de Aznalfarache (Sevilla) (ES)
(74) Representative: Elzaburu Marquez, Alberto
(86) International application number: PCT/ES2007/000059
(87) International publication number: WO 2008/059075

(57) **Abstract**

The invention relates to an audio description and subtitle distribution system for movie theaters of the type used by people with visual and auditory disabilities to be able to completely and normally follow the content of the film, **characterized in that** it uses portable electronic terminals provided with a screen for the subtitles, and a headphone outlet for the audio description, the playback of these terminals being synchronized with the film by means of a wireless network relating them with a computer server which in turn is synchronized with the film projector of the movie theater.

The invention presented provides the main advantage of converting commercial movie theaters into permanent accessible movie theaters indistinctly allowing people with or without sensory disabilities to follow the films, without needing to install complex wiring.

## Description

As indicated by its title, the present specification relates to an audio description and subtitle distribution system for movie theaters of the type used by people with visual and auditory disabilities to be able to normally follow the content of the film, mainly **characterized in that** it uses portable electronic terminals with a height adjustable ergonomic support fixed on the cup-holder or the arm of the seat, and including a screen for reading the subtitles, and a headphone outlet for listening to the audio description, the playback of these terminals being synchronized with the film by means of a wireless network relating them with a computer server which in turn is synchronized with the film projector of the movie theater.

Currently and as the latest data on disabilities confirms, each year there is a considerable increase in the number of people with some type of sensory disability in our society. These people have a serious obstacle to being able to enjoy films, generating a certain social isolation upon separating them from such a culturally and socially important communication means.

In order to be able to allow people with sensory disabilities to follow films, mainly two types of solutions are known and used: subtitling (for people with auditory disabilities) and audio description (for people with visual disabilities).

Subtitling is the formula ensuring maximum accessibility to the contents of the film for people with auditory handicaps, and it consists of the projection synchronized with the film of texts that are normally located on the lower part of the screen and transcribe the dialogues and sounds of the file in writing.

Audio description consists of vocal descriptions which are normally recorded in the silences of the soundtrack of films, series or programs, etc., corresponding to scene changes, character movements, action, landscapes, and all that which is perceived by means of images and which, without this technique, people with visual disabilities could not follow.

Subtitling requires films especially prepared with subtitles for the projection, which is why they are usually never used in commercial movie theaters except for films in original version (not translated), which is usually a very rare case outside the common commercial movie theater circuits. Audio describing requires, in addition to films especially provided with the descriptive content, projection rooms especially made with wired headphone installations and audio distribution so that people with auditory problems can listen to the films. In both cases, there are no commercial movie theaters adapted for these technologies, being limited to a few private movie theaters in institutions dedicated to people with sensory handicaps, which greatly limits their scope.

As a result of the quick development of new computer and audiovisual technologies, multiple and varied systems of incorporating subtitles into the visual contents are currently widely known, as is described in European Patent document 99121272 "A method for controlling the display of subtitles during play of a software carrier", in European Patent document 99121271 "A digital software carrier/player and data stream for controlling display of subtitles" and in European Patent document 94930819 "A system for controlling the display of subtitles during play of a software carrier", however all of them have the drawback of only being dedicated to the computer field or at most to home DVD players, which continues to greatly limit their spread to commercial movie theaters, limiting their use to the domestic field, which makes the social integration of people with sensory handicaps difficult. Furthermore, it does not provide any type of solution for people with visual handicaps who are not able to read the subtitles.

Similarly, there is European Patent document 98965237 "Apparatus for generating the digital data for the pictures of an animation/information sequence for an electronic device", however it has the same drawbacks of only being aimed at DVD and domestic use, only allowing the playback of subtitles.

Systems are also known such as the one described in European Patent document 95943556 "Subtitling transmission system" or in European Patent document 96921025 "Method of video information transmission, as well as an information carrier, a device for receiving and a device for transmitting video information", carrying out a coding together with the video, providing an electronic decoder for subtitles, however it has the same drawbacks of only being aimed at domestic display, only allowing the playback of subtitles.

In order to solve the drawbacks currently existing as regards the problem of adapting commercial movie theater projection rooms for people with sensory handicaps, the audio description and subtitle distribution system for movie theaters object of the present invention has been designed, which uses portable electronic terminals provided with a screen for reading the subtitles, and a headphone outlet for listening to the audio description. These terminals will be given to people with sensory handicaps, which terminals will be fixed by means of a height adjustable ergonomic support which is fixed on the cup-holder or the arm of the seat, or on a support provided at the rear part of the backrest of the front seat, and must be returned when the projection of the film on the screen (6) ends.

The terminals already have the information corresponding to the audio description of the film, preferably in an MP3 file format, and the subtitling of the film, preferably in an STL file format, loaded in their internal memory, the user following the subtitles on the screen incorporated in the terminal or the audio description by means of headphones connected to the terminal.

The terminals play the subtitle and audio description files in a manner synchronized with the film. This synchronization is achieved by means of a wireless network, preferably of the WiFi type with a 802.111b protocol or above, communicating them with a computer server which is in turn synchronized with the film projector of the movie theater. To that end in each movie theater there will be one or several wireless devices, preferably of the WiFi Access Point type, provided with the corresponding antennas from which the radiofrequency signal is emitted. An Access Point is a device managing the packets launched by the computer server, making them reach their destination in the terminals existing inside the movie theater.

The playback of the subtitle and audio description files synchronized with the playback of the film projector will be ordered from the server.

The film projector is connected with an automaton controlling the system. A synchronism signal to the server is obtained from this automaton. This synchronism signal will be preferably obtained upon the passage of a metal adhesive which is placed in the film, having the possibility of placing a plurality of synchronization points in the film.

During the projection of the film the server will emit the synchronization signal at the appropriate moments, which signal reach the terminals so that the audio description and subtitle files are played synchronized with the film.

The wireless network installed inside the movie theater allows controlling the terminals which are active and inside the movie theater, it is thus detected if any terminal leaves said area due to forgetting to return it or due to a theft attempt. If the terminal leaves the domain of the wireless signal, this terminal will continue its playback and will be synchronized again when it enters the domain again.

If a user arrives halfway through the film, the terminal will be resynchronized with the signal emitted by the server by means of the wireless signal. This is possible due to the fact that the audio description and subtitle file is already in the terminal such that it is only necessary to indicate the moment in which said files are being played.

The terminal has a button with on-off functions, a headphone connector and a communications connector, being able to have keys with complementary functions.

It is provided that in each movie theater, there will be load units in which the terminals will be loaded with the data necessary for playing the audio description and the subtitling, in addition to recharging the internal battery for supplying power to the terminal.

The terminals will be physically connected with those terminals by means of the communications connector, preferably of the USB type, such that the load units will automatically detect the connection of the terminals.

The load units have synchronization software responsible for deleting the current content and loading the files of the film which will soon be emitted, all of this being controlled by the computer server.

From this charging place, the terminal will be given to/collected from the end user, presenting his or her corresponding documentation and the use and user of the terminal being noted in a database, with this system use controls both at the user level and film level and other controls considered to be appropriate can be made.

The computer servers existing in each movie theater are connected by means of a wideband communications network, preferably the internet, with a central data server storing the audio description and subtitle files of the projected films, sending them to the computer servers needing them. This central data server has both audio and writing work stations, in which the data necessary for the subtitling and the audio description is generated.

This audio description and subtitle distribution system for movie theaters presented provides multiple advantages over currently available systems, the most important being that it allows converting commercial movie theaters into permanent accessible movie theaters indistinctly aiding people with or without sensory disabilities to follow the films, without the need for costly reforms or for installing complex wiring, allowing a good economic profitability.

Another important advantage is that it makes the possibility of enjoying a film in the movie theater accessible for thousands of people with sensory disabilities, living through the leisure and cultural experience which going to a commercial movie theater involves.

Another advantage of the present invention is that it allows improving the social integration of people with sensory disabilities due to the possibility of sharing a film simultaneously with disabled or non-disabled people.

Another of the most important advantages to be emphasized is the use of a wireless communications network providing mobility and a simple installation, further allowing the easy enlargement of the network.

It must likewise be emphasized that a person can move throughout the movie theater without loosing connectivity at any time since he or she is not linked to wired systems.

It must be highlighted that all the problems of conventional wired audio and data distribution systems are prevented, such as for example signal losses or the need to wire an entire movie theater and all the seats, although later it is only used in a few seats, with the high cost implied.

In order to better understand the object of the present invention, a preferred practical embodiment of an audio description and subtitle distribution system for movie theaters has been depicted in the attached drawings. In said drawings:

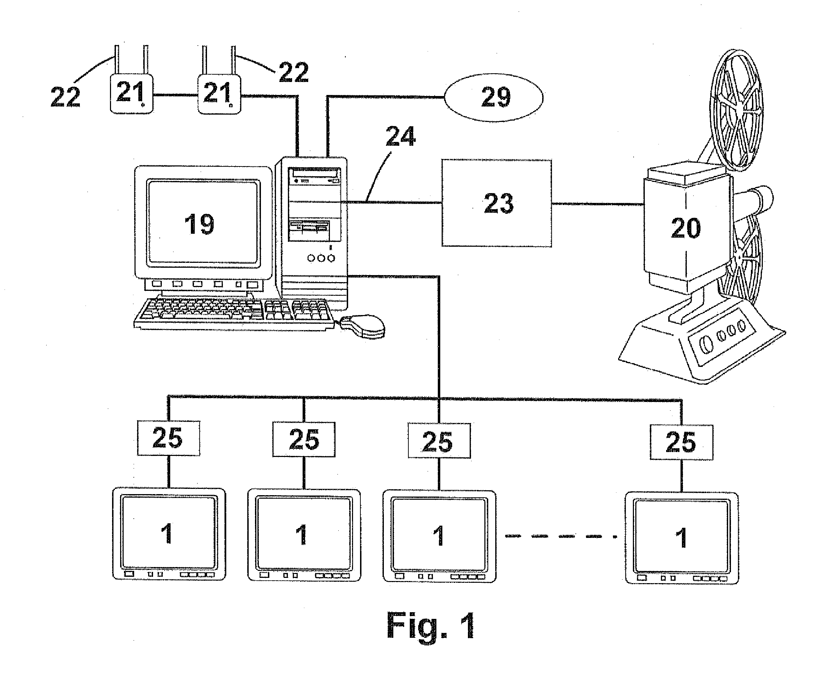

Figure 1 shows a generic block diagram of an installation example in a movie theater.

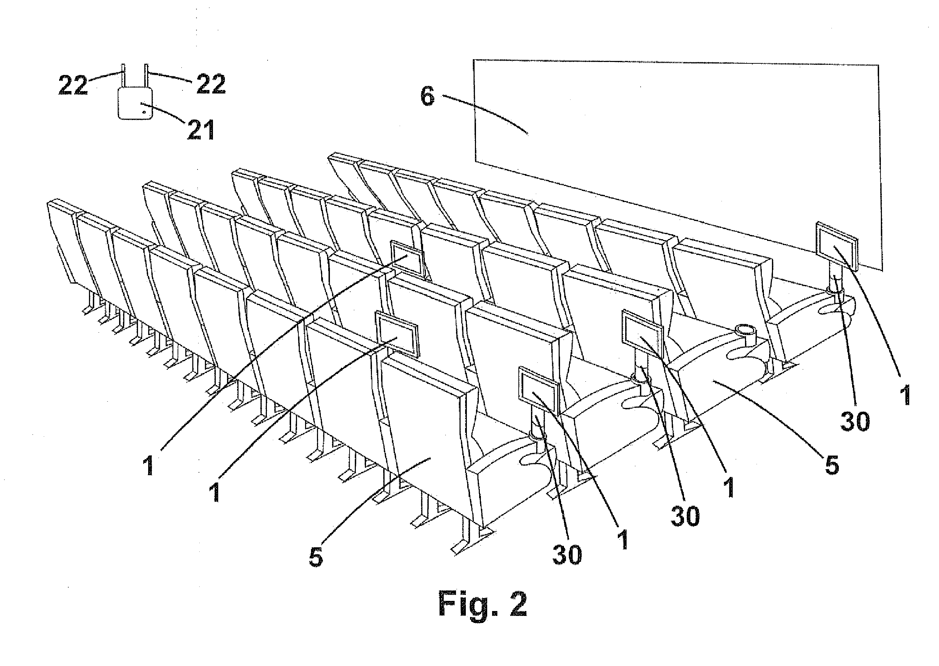

Figure 2 shows a simplified example of the projection room with the terminals placed on some of the seats by means of a height adjustable ergonomic support which is fixed on the cup-holder or the arm of the seat.

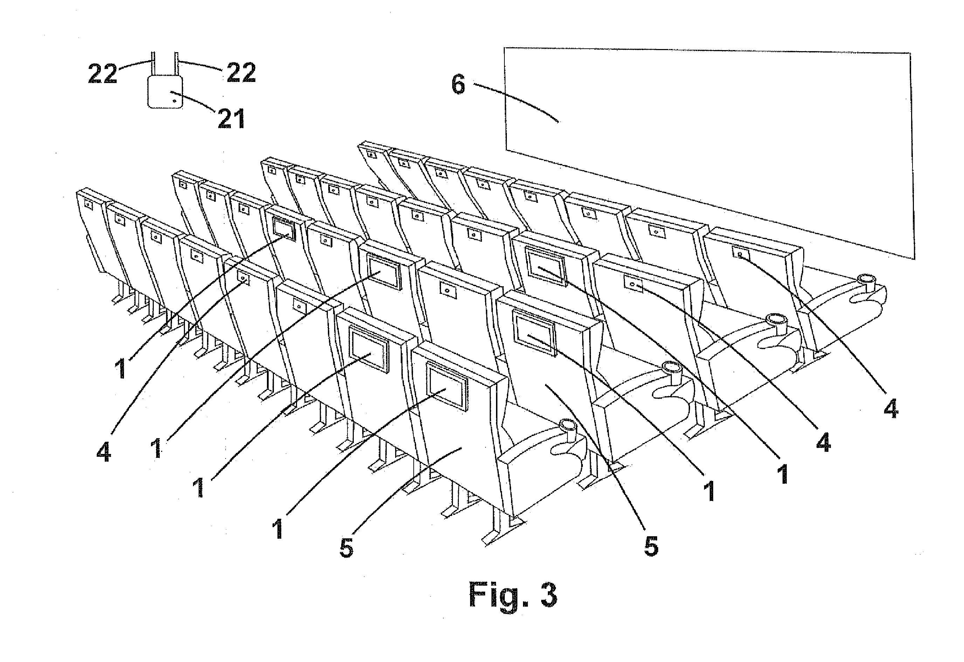

Figure 3 shows a simplified example of the projection room with the terminals fixed on some of the seats by means of the alternative embodiment consisting of a support provided on the rear part of the backrest of the front seat.

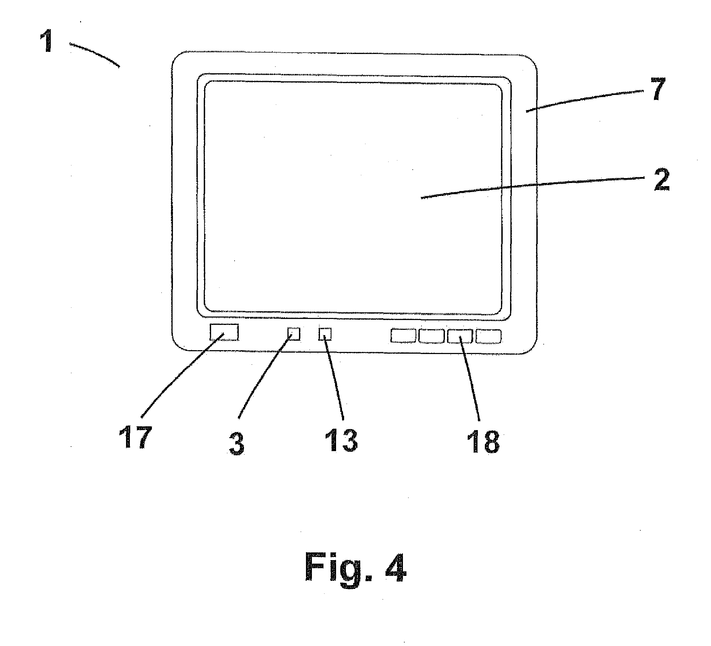

Figure 4 shows an external view of a possible embodiment of a terminal.

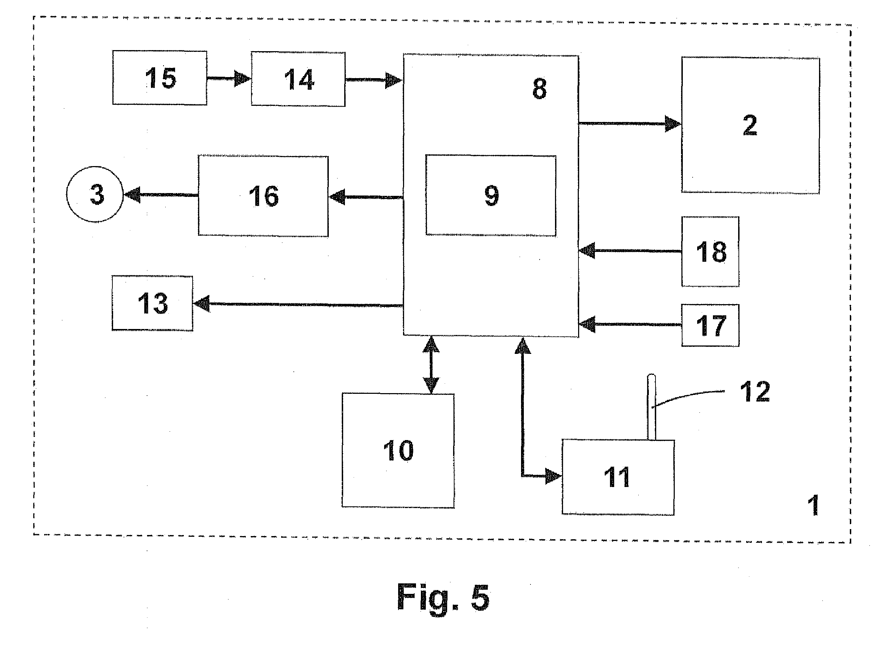

Figure 5 shows a generic block diagram showing the main elements forming part of a terminal.

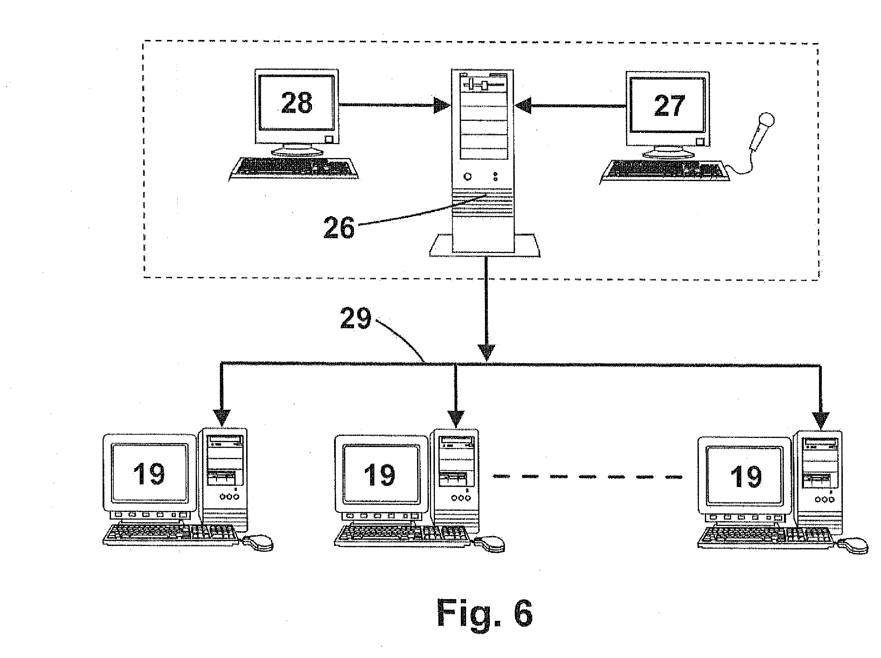

Figure 6 shows a generic block diagram of the interconnection between the central data server and the computer servers of the movie theaters.

The audio description and subtitle distribution system for movie theaters object of the present invention is basically formed, as can be seen in the attached drawings, by portable electronic terminals (1) provided with a screen (2) for reading the subtitles, and a headphone outlet (3) for listening to the audio description. These terminals (1) are given to people with sensory handicaps, which terminals are fixed by means of a height adjustable ergonomic support (30) which is preferably supported on the cup-holder or the arm of the actual seat. An alternative embodiment of the invention is provided in which the terminals (1) are fixed to a support (4) located on the rear part of the backrest of the front seat (5), in this alternative embodiment the supports (4) will be provided on each and every one of the seats (5) of the movie theater. In both cases, the terminals (1) must be returned when the projection of the film on the screen (6).

The terminals (1) are formed by a portable computer system, housed in a preferably quadrangular casing (7) with a small bottom, having the display screen (2) at its front part and housing a microprocessor system (8) with specific software (9) with a nonvolatile storage memory (10), preferably in the form of a hard drive or Flash type memory. The terminals (1) likewise incorporate a wireless communications module (11), preferably of the WiFi type with a 802.111b protocol or above, with an internal antenna (12), and a communications connector (13), preferably of the USB type. The power supply of the terminals is carried out by means of an internal battery (14), preferably of the Li-Ion type, having a charger circuit (15) in order to recharge it. It likewise has at least one sound card (16) with at least one headphone connector (3). It is provided that the terminals (1) are provided with an external on-off switch (17) and with keys (18) for introducing auxiliary functions.

The terminals (1) already have the information corresponding to the audio description of the film, preferably in an MP3 file format, and the subtitling of the file, preferably in an STL file format, loaded into their internal memory (10), the user following the subtitles on the screen (2) incorporated in the terminal (1) or the audio description by means of headphones connected to the terminal (1) by means of the connector (3).

The terminals (1) play the subtitle and audio description files in a manner synchronized with the film projected on the screen (6). This synchronization is achieved by means of a wireless network, preferably of the WiFi type with a 802.111b protocol or above, communicating them with a computer server (1) which is in turn synchronized with the film projector (20) of the movie theater. To that end in each movie theater there will be one or several wireless devices (21), preferably of the WiFi Access Point type, provided with the corresponding antennas (22) from which the radiofrequency signal is emitted.

From the computer server (19) the playback of the audio description and subtitle files stored in the terminals (1) will be ordered, synchronized with the playback of the film projector (20), which can be indistinctly an analog (movie theater film projection) or digital (video projection from digital systems) technology projector.

The film projector (20) is connected with a control and synchronization automaton (23) controlling the system. From this automaton (23) a synchronism signal to the computer server (19) is obtained. This synchronism signal (24) will preferably be obtained, in the case of analog projectors (20), upon the passage of a metal adhesive which is placed in the film, having the possibility of placing a plurality of synchronization points in the film. In the case of digital projectors (20) any of the existing multiplexing and subtitle synchronism processes will be used. During the projection of the film the server will emit a synchronization signal at the appropriate moments, which signal will reach the terminals (1) so that the audio description and subtitle files are played synchronized with the film.

The wireless network installed inside the movie theater allows controlling the terminals (1) which are active and inside the movie theater, it is thus detected if any terminal (1) leaves said area due to forgetting to return it or due to a theft attempt. If the terminal (1) leaves the domain of the wireless signal, this terminal will continue its playback and will be synchronized again when it enters the domain again.

If a user arrives halfway through the film, the terminal will be resynchronized with the signal emitted by the server (19) by means of the wireless signal through the wireless devices (21). This is possible due to the fact that the audio description and subtitle files are already in the terminal such that it is only necessary to indicate the moment in which said files are being played.

It is provided that in each movie theater load units (25) will be provided in which the terminals (1) will be loaded with the data necessary for playing the audio description and the subtitling, in addition to recharging the internal battery (14) for supplying power to each terminal (1). The terminals (1) will be physically connected with these load units (25) by means of the communications connector (13) such that the load units (25) will automatically detect the connection of the terminals (1).

The load units (25) have specific synchronization software responsible for deleting the current content and loading the files of the film which will soon be emitted, all of this controlled by the computer server (19).

The computer servers (19) existing in each movie theater are connected by means of a wideband communications network (29), preferably the internet, with a central data server (26) storing the audio description and subtitle files of the projected films, sending them to the computer servers (19) needing them. This central data server (26) has both audio (27) and writing (28) work stations, in which the data necessary for the subtitling and the audio description is generated.

A detailed description of the rest of the particularities of the system presented or of the component elements integrating it has been voluntarily omitted, since it is considered that the rest of said particularities are not the object of any claim.

## Claims

1. An audio description and subtitle distribution system for movie theaters of the type used by people with visual and auditory disabilities, **characterized by** using portable electronic terminals (1) provided with a screen (2) for reading the subtitles, and a headphone connector (3) for listening to audio description, which are given to people with sensory handicaps, these terminals (1) playing the subtitles and audio description in a manner synchronized with the film projected on a screen (6) by an analog or digital technology film projector (20).

2. An audio description and subtitle distribution system for movie theaters according to the previous claim, **characterized in that** the terminals (1) are formed by a portable computer system, housed in a preferably quadrangular casing (7) with a small bottom, having the display screen (2) at its front part and housing a microprocessor system (8) with specific software (9) with a nonvolatile storage memory (10), preferably in the form of a hard drive or Flash type memory, likewise incorporating a wireless communications module (11), preferably of the WiFi type with a 802.111b protocol or above, with an internal antenna (12), a communications connector (13), preferably of the USB type, a sound card (16) with at least one headphone connector (3) and an internal battery (14) for supplying power, preferably of the Li-Ion type, provided with its corresponding charger circuit (15) in order to recharge it, an external on-off switch (17) and keys (18) for introducing auxiliary functions.

3. An audio description and subtitle distribution system for movie theaters according to the previous claims, **characterized in that** the terminals (1) have the information corresponding to the audio description of the film, preferably in an MP3 file format, and the subtitling of the film, preferably in an STL file format, loaded into their internal memory (10), the user following the subtitles on the screen (2) incorporated in the terminal (1) or the audio description by means of headphones connected to the terminal (1) by means of the connector (17).

4. An audio description and subtitle distribution system for movie theaters according to the previous claims, **characterized in that** the synchronization of the playback of the subtitle and audio description files in the terminals (1) with the film projected on the screen (6) is transmitted from the computer server (19) by means of a wireless network, preferably of the WiFi type with a 802.111b protocol or above, communicating them with a computer server (19) which is in turn synchronized with the film projector (20) of the movie theater, to that end having in each movie theater one or several wireless devices (21), preferably of the WiFi Access Point type, provided with the corresponding antennas (22) from which the radiofrequency signal is emitted.

5. An audio description and subtitle distribution system for movie theaters according to the previous claims, **characterized in that** the terminals (1) are fixed by means of a height adjustable ergonomic support (30) which is preferably supported on the cup-holder or the arm of the actual seat (5).

6. An audio description and subtitle distribution system for movie theaters according to claims 1, 2, 3 and 4, **characterized in that** in an alternative embodiment the terminals (1) are fixed directly on a support (4) located at the rear part of the backrest of the front seat (5), said supports (4) being provided on each and every one of the seats (5) of the movie theater.

7. An audio description and subtitle distribution system for movie theaters according to the previous claims, **characterized in that** the film projector (20) is connected with a control and synchronization automaton (23) from which it sends to the computer server (19) a synchronism signal (24) which will preferably be obtained, in the case of analog producers (20), upon the passage of synchronization points consisting of a metal adhesive placed a variable number of times in the film.

8. An audio description and subtitle distribution system for movie theaters according to the previous claims,
**characterized in that** the wireless network installed in the movie theater detects and controls the terminals (1) which are active and inside the movie theater.

9. An audio description and subtitle distribution system for movie theaters according to the previous claims, **characterized in that** in each movie theater load units (25) are provided in which the terminals (1) will be loaded with the data necessary for playing the audio description and the subtitles, in addition to recharging the internal battery (14) for supplying power to each terminal (1), said terminals (1) being physically connected with the load units (25) by means of the communications connector (13) such that the load units (25) automatically detect the connection of the terminals (1).

10. An audio description and subtitle distribution system for movie theaters according to the previous claims, **characterized in that** the load units (25), by means of specific synchronization software, delete the current content of the terminals (1) and load the files of the film which will soon be emitted, all of this being controlled by the computer server (19).

11. An audio description and subtitle distribution system for movie theaters according to the previous claims, **characterized in that** the computer servers (19) existing in each movie theater are connected by means of a wideband communications network (29), preferably the internet, with a central data server (26) storing the audio description and subtitle files of the projected films, sending them to the computer servers (19) needing them, this central data server (26) having both audio (27) and writing (28) work stations, in which the data necessary for the subtitles and the audio description is generated.
